# EUROPEAN PATENT SPECIFICATION

(11) **EP 3 912 779 B1**
(45) Date of publication and mention of the grant of the patent: **10.12.2025**
(21) Application number: 20791944.0
(22) Date of filing: 14.04.2020
(51) Int. Cl.: B28B 17/02, B28C 5/08, B28B 19/00, B28C 5/16, B01F 27/1152, B01F 27/93, B01F 25/74

(54) **PRETREATMENT CALCINED GYPSUM MANUFACTURING METHOD, GYPSUM SLURRY MANUFACTURING METHOD AND BUILDING BOARD MANUFACTURING METHOD**
VERFAHREN ZUR HERSTELLUNG VON VORBEHANDELTEM KALZINIERTEM GIPS, VERFAHREN ZUR HERSTELLUNG VON GIPSBREI, VERFAHREN ZUR HERSTELLUNG EINER BAUPLATTE
PROCÉDÉ DE FABRICATION DE GYPSE CALCINÉ PRÉTRAITÉ, PROCÉDÉ DE FABRICATION DE BOUE DE GYPSE, PROCÉDÉ DE FABRICATION DE PANNEAU DE CONSTRUCTION CONSTRUCTION

(30) Priority: 15.04.2019 JP 2019077352
(43) Date of publication of application: 24.11.2021
(73) Proprietor: Yoshino Gypsum Co., Ltd., Tokyo 100-0005 (JP)
(72) Inventor: HIROOKA, Yuichi, Tokyo 100-0005 (JP); SOMENO, Hiroyuki, Tokyo 100-0005 (JP)
(74) Representative: Ter Meer Steinmeister & Partner
(86) International application number: PCT/JP2020/016458
(87) International publication number: WO 2020/213611

(56) References cited:
- EP-B1- 0 008 947
- WO-A1-2017/138498
- JP-A- S5 537 499
- JP-A- S5 622 664
- SU-A1- 977 187
- US-A- 2 088 813
- US-A- 4 238 445
- US-A- 4 995 729
- US-A- 5 714 032
- US-A1- 2007 008 815
- US-A1- 2018 243 943

## Description

### TECHNICAL FIELD

The present invention relates to pretreatment calcined gypsum manufacturing methods, gypsum slurry manufacturing methods, and building board manufacturing methods.

### BACKGROUND ART

Gypsum slurry used as the raw material for a gypsum board or the like, is prepared by mixing calcined gypsum, water, and various kinds of additives in some cases, for example.

When preparing the gypsum slurry by adding the water to the calcined gypsum, the gypsum may become refined to generate a large amount of fine grains. If the large amount of fine grains of the calcined gypsum are generated and a surface area of the calcined gypsum increases, a hydration amount of the calcined gypsum becomes extremely large, and gypsum products, such as gypsum boards or the like, manufactured using the gypsum slurry, may require a long time and a large amount of energy to dry and remove excess moisture from the gypsum products.

Accordingly, as disclosed in Patent Document 1, for example, a heal treatment is conventionally performed using a rapidly rotating beater, a bladed blender, or the like, to mix the calcined gypsum with the water in a range of 1% to 10% by weight ratio. By mixing the calcined gypsum with the water by the heal treatment, it is possible to prepare the gypsum slurry while reducing the generation of fine grains of the calcined gypsum.

In addition to the heal treatment, a pretreatment is conventionally performed in advance to mix the calcined gypsum and the various kinds of additives, such as colorants or the like, using the bladed blender or the like.

### PRIOR ART DOCUMENTS

### PATENT DOCUMENTS

Patent Document 1: Japanese Laid-Open Patent Publication No. S55-37499.

US 4238445 A and EP 0008947 B1 also disclose pretreatment calcined gypsum manufacturing methods using different pretreatment mixing and stirring devices.

### DISCLOSURE OF THE INVENTION

### PROBLEM TO BE SOLVED BY THE INVENTION

However, a mixer, such as the bladed blender or the like, which is conventionally used for pretreating the calcined gypsum, needs to mix the calcined gypsum and the additives, such as the water or the like, while kneading up the calcined gypsum and the additives in a height direction, which requires a large amount of energy. Moreover, when scaling up such a mixer according to the manufacturing scale, there is a problem in that an even larger amount of energy is required, or the like.

The present invention is conceived in view of the problem of the prior art described above, and it is one object according to one aspect of the present invention to provide a pretreatment calcined gypsum manufacturing method which can reduce energy consumption.

### MEANS OF SOLVING THE PROBLEM

In order to solve the problem described above, not according to the present invention, there is provided a pretreatment mixing and stirring device, arranged at a stage preceding a slurry formation mixing and stirring device which forms a gypsum slurry by kneading a calcined gypsum and water, and performing a pretreatment by mixing a calcined gypsum with one or more kinds of additives selected from liquids and powders, which includes
a cylindrical housing having a top plate, a bottom plate arranged to oppose to the top plate, a side plate arranged between the top plate and the bottom plate, and a mixing and stirring region where the calcined gypsum and the additive are mixed and stirred in an interior surrounded by the top plate, the bottom plate, and the side plate;
a disk-shaped rotating plate arranged inside the housing;
a rotating drive shaft, penetrating the top plate or the bottom plate of the housing, and coupled to the rotating plate;
a calcined gypsum supply port, arranged in the top plate, and configured to supply the calcined gypsum to the mixing and stirring region; and
an additive supply port, arranged in one of or both of the top plate and the side plate, and configured to supply the additive to the mixing and stirring region.

### EFFECTS OF THE INVENTION

According to one aspect of the present invention, it is possible to provide a pretreatment calcined gypsum manufacturing method which can reduce the energy consumption.

### BRIEF DESCRIPTION OF DRAWINGS

FIG. 1 is a perspective view of an external appearance of a pretreatment mixing and stirring device used in the pretreatment calcined gypsum manufacturing method of the present invention
FIG. 2 is a partial or interrupted perspective view of an internal structure of the pretreatment mixing and stirring device used in the pretreatment calcined gypsum manufacturing method of the present invention.
FIG. 3 is a top view illustrating an example of a configuration of a rotating plate and a scraper when viewed in a state where a top plate is removed.
FIG. 4 is a side view of a portion of the rotating plate having tooth profiles.
FIG. 5 is a perspective view of the scraper.
FIG. 6 is a diagram for explaining a gypsum slurry manufacturing apparatus used in the gypsum slurry manufacturing method of the present invention.
FIG. 7 is a diagram for explaining a building board manufacturing apparatus used in the gypsum slurry manufacturing method of the present invention.

### MODE OF CARRYING OUT THE INVENTION

Embodiments of the present invention will now be described with reference to the accompanying drawings, however, the present invention is not limited to the following embodiments, and various modifications and substitutions may be made to the following embodiments without departing from the scope of the present invention as defined in the appended claims.

### [Pretreatment Mixing and Stirring Device]

An example of a structure of a pretreatment mixing and stirring device used in the pretreatment calcined gypsum manufacturing method of the present invention will be described.

The pretreatment mixing and stirring device is arranged at a stage preceding a slurry formation mixing and stirring device which forms a gypsum slurry by kneading a calcined gypsum and water, and performs a pretreatment by mixing the calcined gypsum with one or more kinds of additives selected from liquids and powders. The pretreatment mixing and stirring device may have the structure including the following.

A cylindrical housing has a top plate, a bottom plate arranged to oppose to the top plate, a side plate arranged between the top plate and the bottom plate, and a mixing and stirring region where the calcined gypsum and the additive are mixed and stirred in an interior surrounded by the top plate, the bottom plate, and the side plate.

A disk-shaped rotating plate is arranged inside the housing.

A rotating drive shaft penetrates the top plate or the bottom plate of the housing, and is coupled to the rotating plate.

A calcined gypsum supply port is arranged in the top plate, and is configured to supply the calcined gypsum to the mixing and stirring region.

An additive supply port is arranged in one of or both of the top plate and the side plate, and is configured to supply the additive to the mixing and stirring region.

Conventionally, a mixer, such as the bladed blender or the like, which is popularly used to pretreat the calcined gypsum, needs to mix the calcined gypsum and the additives, such as the water or the like, while kneading up the calcined gypsum and the additives in the height direction, thereby requiring a large amount of energy, as described above. On the other hand, the pretreatment mixing and stirring device used in the pretreatment calcined gypsum manufacturing method of the present invention can rotate the disk-shaped rotating plate arranged inside the cylindrical housing, and mix and stir the calcined gypsum and the additive supplied to the mixing and stirring region, using a centrifugal force. For this reason, because the calcined gypsum or the like need not be kneaded up in the height direction, unlike the conventionally used mixer, such as the bladed blender or the like described above, it is possible to reduce the energy required for the stirring, and the pretreatment mixing and stirring device can have a reduced energy consumption.

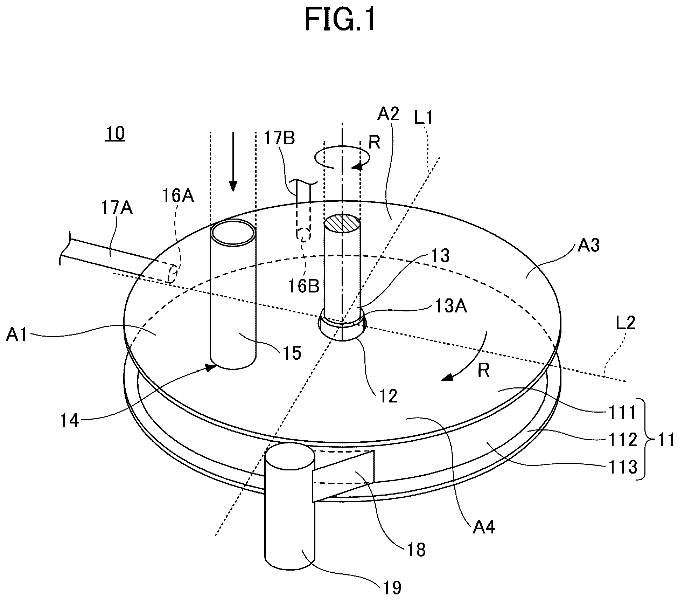

An example of a structure of the pretreatment mixing and stirring device used in the pretreatment calcined gypsum manufacturing method of the present invention will be described hereinafter, with reference to FIG. 1 to FIG. 5.

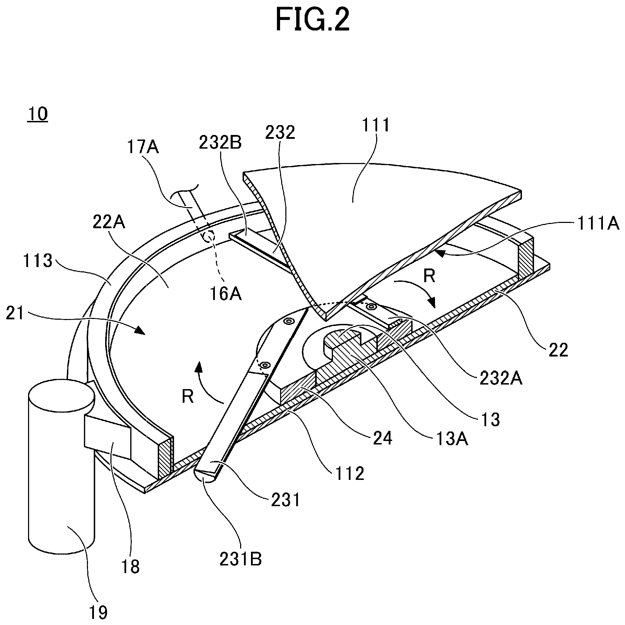

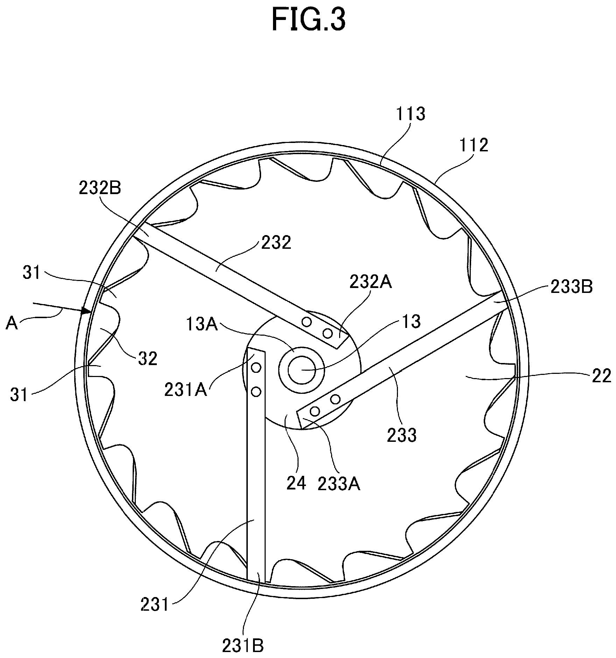

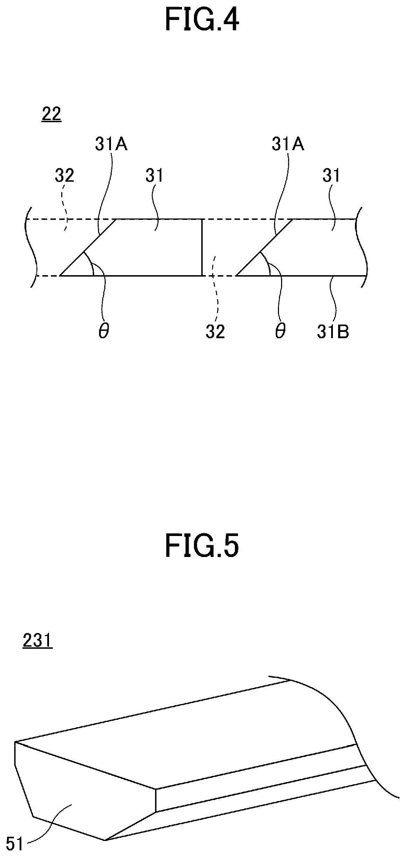

FIG. 1 is a perspective view of an external appearance of a pretreatment mixing and stirring device 10 used in the pretreatment calcined gypsum manufacturing method of the present invention. FIG. 2 is a partial or interrupted perspective view of the internal structure of the pretreatment mixing and stirring device 10 used in the pretreatment calcined gypsum manufacturing method of the present invention. In addition, FIG. 3 is a top view illustrating an example of a configuration of a rotating plate and a scraper when viewed in a state where a top plate is removed. In FIG. 3, the illustration of an additive supply piping, a discharge port, or the like arranged on an outer circumference of a side plate 113 is omitted. FIG. 4 is a side view of a portion of the rotating plate having tooth profiles, and is a side view of a rotating plate 22 viewed in a direction along an arrow A in FIG. 3. FIG. 5 is a perspective view of the scraper. The same components are designated by the same numerals, and a description thereof will be omitted.

As illustrated in FIG. 1 and FIG. 2, the pretreatment mixing and stirring device 10 used in the pretreatment calcined gypsum manufacturing method of the present invention includes a housing 11 having a top plate 111, a bottom plate 112 arranged to oppose the top plate 111, and a side plate 113 arranged between the top plate 111 and the bottom plate 112. The housing 11 has a mixing and stirring region 21 where the calcined gypsum and the additive are mixed and stirred in an interior surrounded by the top plate 111, the bottom plate 112, and the side plate 113 (refer to FIG. 2).

The housing 11 may have a flat cylindrical shape. For this reason, the top plate 111 and the bottom plate 112 may have a plate shape, and a circular shape as illustrated in FIG. 1, for example. The side plate 113 may have a circular shape when viewed from in a vertical direction from above a top surface of the top plate 111.

The top plate 111 and the bottom plate 112 are arranged with a predetermined separation in a height direction, because the side plate 113 is arranged between the top plate 111 and the bottom plate 112. For this reason, the mixing and stirring region 21 (refer to FIG. 2) where the supplied calcined gypsum and additive are mixed, is formed inside the housing 11, as described above.

An internal pressure adjusting means or the like, which is not illustrated, may be provided at any part of the housing 11, such as on the top plate 111, for example, in order to prevent an excessive increase in an internal pressure of the mixing and stirring region 21, for example, inside the pretreatment mixing and stirring device 10.

The housing 11 may have the rotating plate 22 having a disk shape (refer to FIG. 2). The rotating plate 22 is arranged to be rotatable. In the pretreatment mixing and stirring device 10 used in the pretreatment calcined gypsum manufacturing method of the present invention, the calcined gypsum and the additive supplied to the mixing and stirring region 21 by rotating the rotating plate 22 in a direction of an arrow R in FIG. 1, for example, may be caused to flow in a circumferential direction at an outer peripheral region due to action of the centrifugal force.

As described above, because the rotating plate 22 mixes and stirs the calcined gypsum and the additive supplied to a top surface 22A thereof, by applying the centrifugal force to the calcined gypsum and the additive, the rotating plate 22 may be arranged so that a constant separation is provided between the top surface 22A of the rotating plate 22 and a bottom surface 111A of the top plate 111.

The size of the rotating plate 22 is not particularly limited. However, the size of the rotating plate 22 is preferably selected so that a diameter of the rotating plate 22 approximately matches a diameter of an inner circumference of the side plate 113, in order to uniformly mix the calcined gypsum and the additive supplied inside the housing 11. However, when the rotating plate 22 is rotated, a clearance may be provided between the rotating plate 22 and an inner peripheral surface of the side plate 113 so as not to make contact with each other.

The rotating plate 22 illustrated in FIG. 2 is a plate having a circular shape and a smooth outer circumference, but the rotating plate 22 is not limited to thereto. The rotating plate 22 may have a large number of tooth profiles 31 along an outer circumference thereof, as illustrated in FIG. 3, for example. By providing the tooth profiles 31 in this manner, it is possible to more uniformly mix the calcined gypsum and the additive.

As illustrated in FIG. 3 and FIG. 4, the tooth profiles 31 may be formed by providing cutouts 32 in the rotating plate 22. Accordingly, the rotating plate 22 may have the cutouts 32 and the tooth profiles 31 arranged in the outer peripheral region of the rotating plate. As illustrated in FIG. 3, the tooth profiles 31 and the cutouts 32 may be alternately arranged along the outer circumference of the rotating plate 22.

As illustrated in FIG. 4, the tooth profile 31 is preferably configured so that an angle θ between a surface 31A of the tooth profile 31, positioned in front along the rotating direction of the rotating plate 22, and a lower end surface 31B of the tooth profile 31, is 90 degrees or less. More preferably, the tooth profile 31 is configured so that the angle θ described above is less than 90 degrees. The lower end surface 31B of the tooth profile 31 may be referred to as a lower end surface of the rotating plate 22. Because the surface 31A of the tooth profile 31, positioned in the front along the rotating direction of the rotating plate 22, has the shape described above, the calcined gypsum and the additive which fall in gaps between the inner peripheral surface of the side plate 113 and the cutouts 32, and between the inner peripheral surface of the side plate 113 and the rotating plate 22, as the rotating plate 22 rotates, are pushed up by the tooth profiles 31 so as to more uniformly stir the calcined gypsum and the additive. In addition, because the surface 31A of the tooth profile 31, positioned in the front along the rotating direction of the rotating plate 22, has the shape described above, it is possible to cause the calcined gypsum or the like to particularly flow by pushing up the calcined gypsum or the like above the top surface of the rotating plate 22 of the inner peripheral surface of the side plate 113. Hence, it is possible to remove the calcined gypsum or the like adhered on the inner peripheral surface of the side plate 113, by the pushed up calcined gypsum or the like. Further, if additive supply ports 16A and 16B or the like are provided at the inner peripheral surface of the side plate 113, it is possible to reduce adhesion of the calcined gypsum or the like onto the additive supply ports 16A and 16B, or the like. A lower limit value of the angle θ described above is not particularly limited, but may be 10 degrees or greater, for example.

The rotating plate 22 is not limited to such a configuration, and for example, a plurality of pins or the like may be arranged on the top surface 22A, perpendicularly to the top surface 22A, so as to more uniformly mix the supplied calcined gypsum or the like. When arranging the plurality of pins on the top surface 22A of the rotating plate 22, the pins may be arranged along the outer circumference of the rotating plate 22 at constant intervals, or may be arranged along a diametrical direction of the rotating plate 22. The rotary plate may be provided with the tooth profiles 31 described above, and may further have the pins arranged thereon.

The rotating plate 22 is rotatably arranged inside the housing 11 as described above, and in order to rotate the rotating plate 22, a rotating drive shaft 13, which penetrates the top plate 111 or the bottom plate 112 of the housing 11, may be connected to the rotating plate 22.

In the example illustrated in FIG. 1, a circular opening 12 is provided in a central region of the top plate 111 of the housing 11, and an enlarged lower end 13A of the vertical rotating drive shaft 13 penetrates the circular opening 12. As illustrated in FIG. 2, a lower end surface of the enlarged lower end 13A is fixed to a center portion of the top surface 22A of the rotating plate 22. An opening, similar to that described above, may be formed in the bottom plate 112 of the housing 11, for the purposes of connecting the rotating drive shaft to the rotating plate 22.

The rotating drive shaft 13 may be connected to a rotation drive device which is not illustrated, such as a motor or the like, for example, and the rotating drive shaft 13 may be rotated in a direction of an arrow R, for example, so as to rotate the rotating plate 22 according to the rotation of the rotating drive shaft 13. A variable speed gear or the like may be provided between the rotation drive device which is not illustrated and the rotating drive shaft 13, as required.

A rotating speed of the rotating drive shaft 13 and the rotating plate 22 is not particularly limited, and may be set arbitrarily according to amounts or the like of the calcined gypsum and the additive which are supplied, and the rotating speed may be 200 rpm or higher and 600 rpm or lower, for example.

As illustrated in FIG. 1, a calcined gypsum supply port 14 configured to supply the calcined gypsum to the mixing and stirring region 21 may be provided in the top plate 111 of the housing 11. For example, a through hole may be formed in the top plate 111, for use as the calcined gypsum supply port 14. As illustrated in FIG. 1, a calcined gypsum supply pipe 15 may be connected to the calcined gypsum supply port 14 as illustrated in FIG. 1, and the calcined gypsum may be supplied to the mixing and stirring region 21 via the calcined gypsum supply pipe 15 and the calcined gypsum supply port 14. The calcined gypsum supply pipe 15 may be connected to a calcined gypsum storage tank or the like which is not illustrated, for example, and configured to supply the calcined gypsum from the storage tank.

In addition, the additive supply ports 16A and 16B for supplying the additive to the mixing and stirring region 21 may be provided in one of or both of the top plate 111 and the side plate 113 of the housing 11. For example, through holes may be formed in the top plate 111 and the side plate 113 for use as the additive supply ports 16A and 16B.

By providing the additive supply ports in the top plate, it is possible to add the additive to the calcined gypsum flowing in the mixing and stirring region 21, and the uniformly stir and mix the calcined gypsum and the additive.

In addition, by providing the additive supply ports 16A and 16B in the side plate 113, it is possible to add the additive to the calcined gypsum which moved to the outer circumference side of the mixing and stirring region 21, by the centrifugal force applied from the rotating plate 22. By adding the additive from the additive supply ports 16A and 16B provided in the side plate 113, it is possible to apply a pressure in a direction toward the center of the rotating plate 22, with respect to the calcined gypsum and the additive flowing in the mixing and stirring region 21. For this reason, it is possible to reduce adhesion of the calcined gypsum or the like onto a periphery or the like of the additive supply ports 16A and 16B at the inner peripheral surface of the side plate 113.

The additive supply ports may be provided in one of the top plate and the side plate, or in both of the top plate and the side plate.

The additive supply ports 16A and 16B are preferably arranged above the top surface 22A of the rotating plate 22, as illustrated in FIG. 2, for example. By arranging the additive supply ports 16A and 16B above the top surface 22A of the rotating plate 22, it is possible to supply the additive directly to the calcined gypsum or the like flowing on the top surface 22A of the rotating plate 22. Further, the calcined gypsum or the like flowing on the top surface 22A of the rotating plate 22 flows in the circumferential direction at the outer peripheral region due to the centrifugal force, and circulates on the inner peripheral surface of the side plate 113. For this reason, if the additive supply ports 16A and 16B are provided in the side plate 113, it is possible to remove the calcined gypsum or the like adhered to the inner peripheral surface of the side plate 113, including vicinities of the additive supply ports 16A and 16B, or prevent adhesion of the calcined gypsum or the like onto the inner peripheral surface of the side plate 113. That is, by arranging the additive supply ports 16A and 16B above the top surface 22A of the rotating plate 22, it is possible to supply the additive directly to the calcined gypsum or the like. Further, if the additive supply ports 16A and 16B are provided in the side plate 113, it is possible to remove the calcined gypsum adhered to the vicinities of the additive supply ports 16A and 16B, or to reduce adhesion of the calcined gypsum onto the side plate 113.

Providing the additive supply ports 16A and 16B above the top surface 22A of the rotating plate 22 means that at least a portion of the additive supply ports 16A and 16B is located at a height position higher than or equal to the position of the top surface 22A of the rotating plate 22. Lower end surfaces of the additive supply ports 16A and 16B are more preferably located at a height position higher than or equal to the position of the top surface 22A of the rotating plate 22. That is, the additive supply ports 16A and 16B in their entirety are further more preferably located at a height position higher than or equal to the position of the top surface 22A of the rotating plate 22. In addition, when providing a plurality of additive supply ports, all of the additive supply ports are preferably arranged above the top surface of the rotating plate.

The additive supply ports 16A and 16B may be provided in the side plate 113 as described above, and when providing the additive supply ports 16A and 16B in the side plate 113, the additive supply ports 16A and 16B may be arranged below an upper end of the side plate 113.

A flow rate, a pressure, or the like of the additive added from the additive supply ports 16A and 16B are not particularly limited. If the additive supply ports 16A and 16B are provided in the side plate 113, the flow rate or the like of the additive is preferably adjusted so that the additive moves in a direction toward the center of the rotating plate 22 in the mixing and stirring region 21, for example. That is, the flow rate or the like of the additive is preferably selected so that the addition of the additive to the mixing and stirring region 21 is not inhibited by being pushed by the calcined gypsum or the like flowing in the mixing and stirring region 21.

A plurality of additive supply ports 16A and 16B may be provided, and the additive supply ports 16A and 16B may be provided at the two locations illustrated in FIG. 1, for example, or may be provided at three or more locations. In addition, only one additive supply port may be provided. The additive supply pipes 17A and 17B may be connected to the additive supply ports 16A and 16B, and the additive in the additive storage tank may be supplied via the supply pipes.

The additive supplied from the additive supply ports 16A and 16B is water. If the plurality of additive supply ports is provided as described above, the additive supplied from the additive supply ports is the same for each additive supply port.

Regions where the calcined gypsum supply port 14 and the additive supply ports 16A and 16B are arranged are not particularly limited. For example, when providing the discharge port 18 which will be described later, the housing 11 may be divided by a straight line L1, and a straight line L2 perpendicular to the straight line L1, into regions A1 through A4 in an order from the discharge port 18 along the rotation direction of the rotating drive shaft 13 and the rotating plate 22. As illustrated in FIG. 1, the straight line L1 is a line passing through an end of the discharge port 18 on a downstream side along the rotating direction, and the center of the rotating drive shaft 13. As illustrated in FIG. 1, the regions A1 through A4 are arranged from the discharge port 18 in the order of the region A1, the region A2, the region A3, and the region A4 along the rotating direction of the rotating drive shaft 13 or the like. In this case, the calcined gypsum supply port 14 is preferably arranged in the region A1, and the additive supply ports 16A and 16B are preferably arranged in the region A2. After the calcined gypsum is supplied by providing the calcined gypsum supply port 14 in the region A1, the calcined gypsum is gradually conveyed in a direction of the outer circumference of the rotating plate 22 by the centrifugal force caused by the rotation of the rotating plate 22. Then, after the calcined gypsum reaches the region A2 and the additive from the additive supply ports 16A and 16B is added with respect to the calcined gypsum which is spread to a certain extent, the calcined gypsum and the additive are thoroughly mixed in the regions A3 and A4, and a gypsum mixture may be discharged outside the housing 11 via the discharge port 18 provided in the region A4.

In the pretreatment mixing and stirring device 10 used in the pretreatment calcined gypsum manufacturing method of the present invention, a ratio of the additive is 0.01 parts or greater and 10 parts or less, with respect to 100 parts of the calcined gypsum

In addition, the pretreatment mixing and stirring device 10 may also have the discharge port 18 configured to discharge the gypsum mixture mixed and stirred in the mixing and stirring region 21. When using the pretreatment mixing and stirring device 10 in a batch process, a discharge port may not be provided, but when using the pretreatment mixing and stirring device 10 in a continuous process, the discharge port 18 may be provided as described above. The discharge port 18 may be provided at a location capable of discharging the gypsum mixture, that is, the pretreatment calcined gypsum, mixed in the mixing and stirring region 21, and the discharge port 18 may be provided in the bottom plate 112 or the side plate 113, for example.

The discharge port 18 may be provided on either one of the bottom plate 112 and the side plate 113, but may also be provided on both the bottom plate 112 and the side plate 113.

Because the suitable positional relationship of the discharge port 18, the calcined gypsum supply port 14, and the additive supply ports 16A and 16B is already described above, a description of the same will be omitted.

A vertical chute 19 or the like may be connected to the discharge port 18, as required.

The pretreatment mixing and stirring device used in the pretreatment calcined gypsum manufacturing method of the present invention may further have a scraper.

More particularly, scrapers 231 through 233 having at least one bar shape may further be arranged in the mixing and stirring region 21, above the top surface of the rotating plate 22, as illustrated in FIG. 2 and FIG. 3, for example.

In this case, first ends 231A, 232A, and 233A of the scrapers 231 through 233 may be arranged in the central region of the rotating plate 22, and second ends 231B, 232B, and 233B, the opposite to the first ends 231A, 232A, and 233A, may be arranged on the outer circumference side of the rotating plate 22.

More particularly, an annular base 24 may be provided concentrically with the enlarged lower end 13A of the rotating drive shaft 13, for example. The first ends 231A through 233A of the scrapers 231 through 233 may be fixed to a top surface of the annular base 24 by screws or the like. The annular base 24 may be fixed to the rotating plate 22, and the annular base 24 and the scrapers 231 through 233 may be configured to rotate with rotation of the rotating plate 22.

A gap is preferably formed between top surfaces of the scrapers 231 through 233 and the bottom surface 111A of the top plate 111 (refer to FIG. 2), so that the top plate 111 and the scrapers 231 through 233 preferably do not interfere with one another.

The scrapers 231 through 233 may be arranged so that the top surfaces of the scrapers 231 through 233 are positioned near the bottom surface 111A of the top plate 111. In this case, the scrapers 231 through 233 are preferably configured to be able to remove the calcined gypsum or the like adhered to the bottom surface 111A of the top plate 111.

The second ends 231B through 233B of the scrapers 231 through 233 may be arranged near the inner peripheral surface of the side plate 113, and is preferably configured to be able to remove the calcined gypsum or the like adhered to the inner peripheral surface of the side plate 113.

The particular shape of the scrapers 231 through 233 is not particularly limited. For example, as illustrated in FIG. 5, a cross section 51 perpendicular to a longitudinal direction of the scraper 231 may have an isosceles trapezoidal shape having two chamfered corners. This cross section may have an arbitrary shape, such as an isosceles trapezoidal shape without chamfering, a semi-circular shape, or the like.

A sprayed film may be formed on, or a ceramic plate may be attached to, a portion of or all of the surface of the scraper to reduce abrasion wear, as required.

In the example illustrated in FIG. 2 and FIG. 3, three linear scrapers 231 through 233 are arranged, however, the scrapers are not limited to such. For example, one or two scrapers may be arranged, or four or more scrapers may be arranged. The scraper may have a shape including one or a plurality of bent portions along the longitudinal direction. If the pretreatment mixing and stirring device has a plurality of scrapers, the plurality of scrapers may have the same shape, or may include scrapers having different shapes.

By arranging the scrapers 231 through 233 as described above, it is possible to even more uniformly mix the calcined gypsum and the additive. Further, it is possible to particularly reduce the adhesion of the calcined gypsum or the like onto the bottom surface 111A of the top plate 111 and the inner peripheral surface of the side plate 113, for example.

The pretreatment calcined gypsum, which is the gypsum mixture obtained using the pretreatment mixing and stirring device, may be supplied to the slurry formation mixing and stirring device configured to prepare the gypsum slurry, for example. The pretreatment calcined gypsum, which is the gypsum mixture, does not become a gypsum slurry, and is the gypsum mixture in powder form, because the amount of water added is small. For this reason, the pretreatment mixing and stirring device may be arranged at a stage preceding the slurry formation mixing and stirring device, that is, on the upstream side of the manufacturing process, and may be connected to the slurry formation mixing and stirring device via a pipe or the like. However, a screw conveyor, which is a transporter, a grinding mill, which adjusts a grain size or the like of the pretreatment calcined gypsum, as required, or the like, may be arranged between the pretreatment mixing and stirring device and the slurry formation mixing and stirring device. An entoleter mill, a tube mill, or the like, for example, may be used for the grinding mill.

According to the pretreatment calcined gypsum manufacturing method of the present invention, the calcined gypsum and the additive supplied onto the rotating plate are mixed and stirred by rotating the rotating plate, to perform the pretreatment of the calcined gypsum. For this reason, compared to the conventional pretreatment which uses the bladed blender or the like to stir the calcined gypsum while kneading up the calcined gypsum in the height direction, it is possible to reduce the amount of energy consumed per unit mass of the calcined gypsum to be pretreated to one-half or less, for example.

Further, according to the pretreatment calcined gypsum manufacturing method of the present invention, water is used as the additive, and it is possible to more uniformly mix the calcined gypsum and the water, compared to the conventional pretreatment which uses the bladed blender or the like. For this reason, it is possible to greatly improve the efficiency of the heal treatment of the calcined gypsum, and greatly increase the amount of the heal treatment of the calcined gypsum.

When scaling up the mixer, such as the bladed blender or the like, used for the conventional pretreatment, it is difficult from the viewpoint of the cost or the like to achieve the scaling up due to problems such as the even larger amount of energy required for the process. For this reason, the amount of calcined gypsum which can be subjected to the heal treatment is conventionally limited, and if a large amount of calcined gypsum is to be used, the calcined gypsum subjected to the heal treatment is mixed with the calcined gypsum not subjected to the heal treatment, for use as a slurry preparation calcined gypsum. When the slurry is prepared using the slurry preparation calcined gypsum, it is difficult to reduce the moisture required for the mixing and stirring during the preparation of the slurry, because the extent of refining the calcined gypsum in the slurry becomes inconsistent. As a result, a long time and a large amount of energy are required to dry and remove excess moisture from the gypsum product, such as a gypsum board or the like manufactured using the slurry.

On the other hand, according to the pretreatment calcined gypsum manufacturing method of the present invention, water is used as the additive, and it is possible to greatly improve the efficiency of the heal treatment of the calcined gypsum, and greatly increase the amount of the heal treatment of the calcined gypsum, as described above. For this reason, by using the pretreatment mixing and stirring device in the method of the present invention, a large amount of calcined gypsum can be efficiently and uniformly subjected to the heal treatment, without the conventional limitation on the amount of calcined gypsum which can be subjected to the heal treatment. Further, when gypsum slurry is prepared using the pretreatment calcined gypsum which is subjected to the heal treatment according to the method of the present invention, and the gypsum product, such as the gypsum board or the like, is manufactured, it is possible to reduce the moisture required for the mixing and stirring during the preparation of the slurry. As a result, it is possible to reduce the time and energy required to dry and remove the excess moisture from the gypsum product, such as the gypsum board or the like.

### [Gypsum Slurry Manufacturing Apparatus]

Next, a gypsum slurry manufacturing apparatus used in the gypsum slurry manufacturing method of the present invention will be described.

The gypsum slurry manufacturing apparatus includes
a pretreatment mixing and stirring device described above, and
a slurry formation mixing and stirring device configured to form a slurry by kneading the calcined gypsum subjected to the pretreatment by the pretreatment mixing and stirring device, and the water.

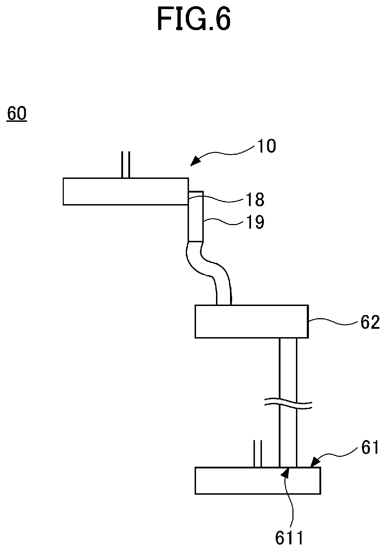

As illustrated in FIG. 6, a gypsum slurry manufacturing apparatus 60 includes the pretreatment mixing and stirring device 10, and a slurry formation mixing and stirring device 61. In FIG. 6, each component, such as the pretreatment mixing and stirring device 10, is illustrated in a simplified manner.

The particular structure of the slurry formation mixing and stirring device 61 is not particularly limited, and a pin type mixer, a scraper type mixer, or the like, conventionally used to manufacture the gypsum slurry by mixing the pretreatment calcined gypsum and water, may be used. The slurry formation mixing and stirring device may add and mix an arbitrary additive, other than the calcined gypsum and the water.

According to the gypsum slurry manufacturing method of the present invention, the pretreatment is uniformly performed with respect to the calcined gypsum, while reducing the amount of energy consumption, by providing the pretreatment mixing and stirring device 10. For this reason, according to the gypsum slurry manufacturing method of the present invention, it is possible to reduce the amount of energy required to manufacture the gypsum slurry.

Further, since the heal treatment is performed in the pretreatment mixing and stirring device 10 using the water as the additive, the calcined gypsum and the water, which is the additive, can be mixed more uniformly, and it is possible to greatly improve the efficiency of the heal treatment of the calcined gypsum, and greatly increase the amount of the heal treatment of the calcined gypsum. Moreover, by using such pretreatment calcined gypsum, it is possible to reduce the moisture required when preparing the gypsum slurry in the slurry formation mixing and stirring device 61. As a result, it is possible to reduce the time and energy required to dry and remove the excess moisture from the gypsum product, such as the gypsum board or the like, manufactured using the gypsum slurry obtained by the gypsum slurry manufacturing method of the present invention.

The pretreatment mixing and stirring device 10 can perform the pretreatment by mixing the calcined gypsum and the additive as described above, however, the calcined gypsum may adhere onto the bottom surface 111A of the top plate 111 by hydration hardening or flocculation, for example, and the calcined gypsum may be discharged without being sufficiently shredded (the gypsum adhered by hydration hardening or flocculation will hereinafter be referred to as "gypsum waste"). When the gypsum waste is supplied to the slurry formation mixing and stirring device 61, the gypsum waste may remain in the gypsum slurry, causing a problem such as a paper tear or the like, in which a board lining paper tears during the manufacturing of the gypsum board.

Hence, the gypsum slurry manufacturing device 60 preferably further includes a gypsum waste reducing section 62 configured to reduce and remove the gypsum waste, located on an upstream side along a conveying direction of the pretreatment calcined gypsum than a pretreatment calcined gypsum supply port 611 of the slurry formation mixing and stirring device 61. The pretreatment calcined gypsum supply port 611 refers to an opening through which the pretreatment calcined gypsum is supplied into the slurry formation mixing and stirring device 61.

That is, the gypsum slurry manufacturing apparatus 60 preferably further includes the gypsum waste reducing section 62 configured to reduce and remove the gypsum waste, arranged between the discharge port 18 of the pretreatment mixing and stirring device 10 and the pretreatment calcined gypsum supply port 611 of the slurry formation mixing and stirring device 61. The gypsum waste reducing section 62 may be provided at the discharge port 18 of the pretreatment mixing and stirring device 10, or at the pretreatment calcined gypsum supply port 611 of the slurry formation mixing and stirring device 61, or on a pipe or a transporter connecting the discharge port 18 and the pretreatment calcined gypsum supply port 611. The transporter refers to a device, such as the screw conveyor or the like, configured to transport (convey) the pretreatment calcined gypsum.

A particular structure of the gypsum waste reducing section 62 is not particularly limited, but the gypsum waste reducing section 62 may include one or more kinds of devices selected from a net, a sieve, a grinding mill, a trommel, or the like, for example. Examples of the grinding mill include the entoleter mill, the tube mill, or the like, for example.

### [Building Board Manufacturing Apparatus]

Next, a building board manufacturing method according to the present invention will be described.

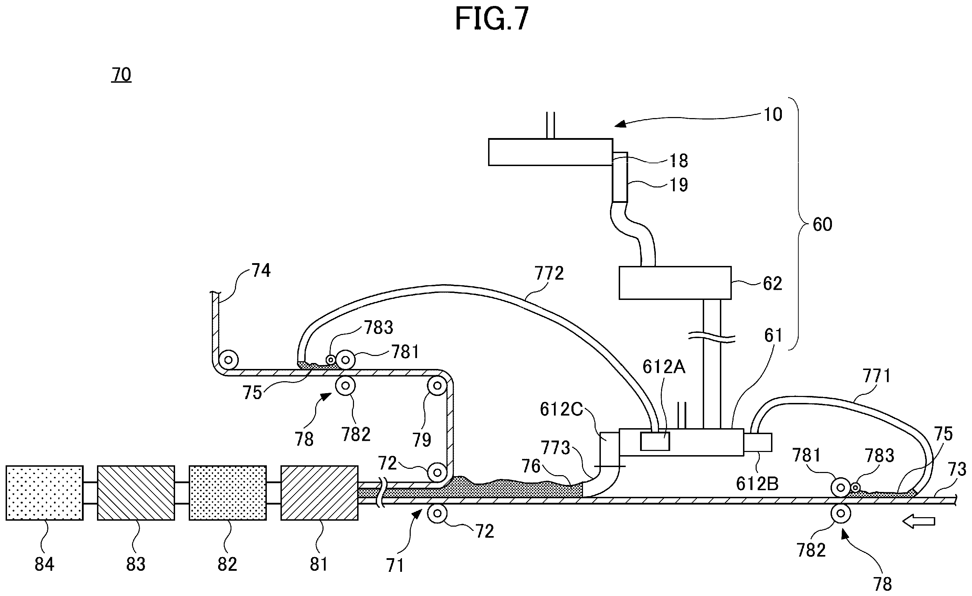

As illustrated in FIG. 7, a building board manufacturing apparatus 70 includes the gypsum slurry manufacturing apparatus 60 described above.

The building board manufacturing apparatus 70 may include a molding section 71, a rough cutting section 81, a drying section 82, a cutting section 83, a loading section 84, or the like, in addition to the gypsum slurry manufacturing apparatus 60.

The molding section 71 may have a molding machine 72, and supply the gypsum slurry between surface cover lining paper 73 and back cover lining paper 74, to mold the gypsum slurry into a predetermined shape by the molding machine 72.

In the molding section 71, the surface cover lining paper (board lining paper) 73, which is a surface material, is conveyed along a production line from the right side toward the left side in FIG. 7.

The slurry formation mixing and stirring device 61 of the gypsum slurry manufacturing apparatus 60 described above may be arranged at a predetermined position associated with a conveying line of the surface cover lining paper 73 being conveyed, such as above or beside the conveying line, for example. The pretreatment mixing and stirring device 10, the gypsum waste reducing section 62, or the like may be connected to the slurry formation mixing and stirring device 61 and arranged at arbitrary locations.

Foams may be added from gypsum slurry distribution ports 612A, 612B, and 612C, as required, to obtain a gypsum slurry having an arbitrary density by adjusting the amount of foams added. For example, a first gypsum slurry 75 and a second gypsum slurry 76 having different densities may be prepared, by adjusting the amount of foams added.

The first gypsum slurry 75 which is obtained, is supplied through delivery pipes 771 and 772, onto the surface cover lining paper (board lining paper) 73 and the back cover lining paper (board lining paper) 74 on the upstream side of the roll coater 78 along the conveying direction. The first gypsum slurry 75 on the surface cover lining paper 73 and the first gypsum slurry 75 on the back cover lining paper 74 respectively reach a spreader of the roll coater 78, and are spread by the spreader. The roll coater 78 includes a coating roll 781, a backing roll 782, and a waste removal roll 783, and the first gypsum slurry 75 is spread by these rolls.

A thin layer of the first gypsum slurry 75 is formed on the surface cover lining paper 73. Similarly, a thin layer of the first gypsum slurry 75 is formed on the back cover lining paper 74. FIG. 7 illustrates an example in which the first gypsum slurry 75 is coated on the surface cover lining paper 73 and the back cover lining paper 74 using the roll coater 78, but the application of the first gypsum slurry 75 is not limited to such a coating. For example, the first gypsum slurry 75 may be coated on only one of the surface cover lining paper 73 and the back cover lining paper 74 using the roll coater 78. Alternatively, the first gypsum slurry 75 may be disposed only at a side end of the surface cover lining paper 73.

The surface cover lining paper 73 is conveyed as it is, and the back cover lining paper 74 is turned by a turning roller 79 in the direction of the conveying line of the surface cover lining paper 73. Then, both the surface cover lining paper 73 and the back cover lining paper 74 reach the molding machine 72. The second gypsum slurry 76 is supplied from the slurry formation mixing and stirring device 61 through a pipe 773, between the thin layers formed on the surface cover lining paper 73 and the back cover lining paper 74.

The gypsum slurry is then molded by the molding machine 72, to form a molded body. The formed molded body of the gypsum slurry undergoes hydration hardening during the process of conveying the molded body.

FIG. 7 illustrates an example in which the first gypsum slurry 75 and the second gypsum slurry 76 are manufactured by a single slurry formation mixing and stirring device 61, but the formation of the gypsum slurry is not limited to such. For example, two slurry formation mixing and stirring devices 61 may be provided, and the first gypsum slurry 75 and the second gypsum slurry 76 may be manufactured by the two slurry formation mixing and stirring devices 61, respectively.

Further, the present invention is not limited to the embodiment which uses the first gypsum slurry and the second gypsum slurry, and for example, one kind of gypsum slurry may be manufactured and supplied onto the board lining paper.

As described above, the building board manufacturing apparatus 70 may further include the rough cutting section 81, the drying section 82, the cutting section 83, the loading section 84, or the like, on the downstream side of the molding section 71.

The rough cutting section 81 is a component configured to molded body of the gypsum slurry molded by the molding section 71, and may include a cutting means, such as a rotary cutter or the like. The rough cutting section 81 can cut the molded body of the gypsum slurry according to the size of a dryer, a heating furnace, or the like included in the drying section 82.

The drying section 82 may include the dryer and the heating furnace. The drying section 82 may forcibly dry the molded body of the gypsum slurry into a hardened gypsum body. The drying section may be configured to dry the molded body of the gypsum slurry by natural drying, without using the drier or the like.

The cutting section 83 may include a cutter. The cutting section 83 may cut the molded body of the gypsum slurry or the hardened gypsum body according to the size of the product.

The loading section 84 may include a lifter or the like, for example, and may stack the building boards cut by the cutting section 83, to be stored in a storage, or to be loaded into trucks or the like for shipment.

The building board manufacturing apparatus manufactures the gypsum board as an example of the building board. The building board manufacturing apparatus may manufacture various kinds of building boards, by modifying the board lining paper, which is the surface material, to a non-woven glass fiber (glass tissue), a glass mat, or the like, and arranging such a modified surface material on the surface, or embedding the modified surface material near the surface, for example. More particularly, it is possible to manufacture one or more kinds of building boards selected from a glass mat gypsum board, a non-woven glass fiber-containing gypsum board, a gypsum board prescribed by JIS A 6901 (2014), a gypsum board which is lighter or heavier than the gypsum board prescribed by JIS A 6901 (2014), or the like, for example.

Particularly because the gypsum boards are popularly used, the building board manufactured by the building board manufacturing apparatus is preferably the gypsum board.

### [Pretreatment Calcined Gypsum Manufacturing Method]

Next, a pretreatment calcined gypsum manufacturing method according to the present invention will be described.

The pretreatment calcined gypsum manufacturing method according to the present invention manufactures a pretreatment calcined gypsum by mixing a calcined gypsum and water, and may include the following processes.

The pretreatment calcined gypsum manufacturing method according to the present invention is performed using the pretreatment mixing and stirring device described above. For this reason,

A raw material supply process supplies the calcined gypsum from the calcined gypsum supply port, and the additive from the additive supply port.

A mixing and stirring process rotates the rotating plate by rotating the rotating drive shaft, to mix and stir the calcined gypsum and the additive.

The pretreatment mixing and stirring device has a cylindrical housing having a top plate, a bottom plate arranged to oppose to the top plate, a side plate arranged between the top plate and the bottom plate, and a mixing and stirring region where the calcined gypsum and the additive are mixed and stirred in an interior surrounded by the top plate, the bottom plate, and the side plate, as described above. The pretreatment mixing and stirring device also has a calcined gypsum supply port, arranged in the top plate, and configured to supply the calcined gypsum to the mixing and stirring region, and an additive supply port, arranged in one of or both of the top plate and the side plate, and configured to supply the additive to the mixing and stirring region.

The pretreatment calcined gypsum manufacturing method according to the present invention can manufacture the pretreatment calcined gypsum using the pretreatment mixing and stirring device 10 described above. Each of the processes will be described.

### (Raw Material Supply Process)

A raw material supply process supplies the calcined gypsum and the additive to the mixing and stirring region 21 provided inside the housing 11 of the pretreatment mixing and stirring device 10.

The calcined gypsum is supplied from the calcined gypsum supply port 14 provided in the top plate 111 of the housing 11. In addition, the additive is supplied from the additive supply ports 16A and 16B provided in either one of or both of the top plate 111 and the side plate 113 of the housing 11. By supplying the additive from the additive supply ports 16A and 16B provided on either one of or both of the top plate 111 and the side plate 113 of the housing 11, the additive can be added to the calcined gypsum and uniformly mixed and stirred during the mixing and stirring process which will be described later.

In particular, by providing the additive supply ports 16A and 16B in the side plate 113 of the housing 11, the additive can be added to the calcined gypsum which moved to the outer circumference side of the mixing and stirring region 21 due to the centrifugal force applied by the rotating plate 22 during the mixing and stirring process. By adding the additive from the additive supply ports 16A and 16B provided in the side plate 113, it is possible to apply a pressure in a direction toward the center of the rotating plate 22, with respect to the calcined gypsum and the additive flowing in the mixing and stirring region 21. For this reason, it is possible to reduce adhesion of the calcined gypsum or the like onto the periphery or the like of the additive supply ports 16A and 16B at the inner peripheral surface of the side plate 113.

The additive supply ports 16A and 16B are preferably arranged above the top surface 22A of the rotating plate 22, as illustrated in FIG. 2, for example. This is because the additive can be supplied directly to the calcined gypsum or the like flowing on the top surface 22A of the rotating plate 22, by arranging the additive supply ports 16A and 16B above the top surface 22A of the rotating plate 22. Further, the calcined gypsum or the like flowing on the top surface 22A of the rotating plate 22, flows in the circumferential direction at the outer peripheral region due to the centrifugal force, and circulates on the inner peripheral surface of the side plate 113. For this reason, when the additive supply ports 16A and 16B are provided in the side plate 113, it is possible to remove the calcined gypsum or the like adhered to the inner peripheral surface of the side plate 113, including the vicinities of the additive supply ports 16A and 16B, or prevent the calcined gypsum or the like from adhering to the inner peripheral surface of the side plate 113. That is, by arranging the additive supply ports 16A and 16B above the top surface 22A of the rotating plate 22, it is possible to add the additive directly to the calcined gypsum or the like. Further, by providing the additive supply ports 16A and 16B in the side plate 113, it is possible to remove the calcined gypsum adhered in the vicinities of the additive supply ports 16A and 16B, or prevent the calcined gypsum or the like from adhering to the inner peripheral surface of the side plate 113.

Providing the additive supply ports 16A and 16B above the top surface 22A of the rotating plate 22 means that at least a portion of the additive supply ports 16A and 16B is located at a height position higher than or equal to the position of the top surface 22A of the rotating plate 22. It is further preferable that the lower end surfaces of the additive supply ports 16A and 16B are located at a height position higher than or equal to the position of the top surface 22A of the rotating plate 22. That is, it is further preferable that the additive supply ports 16A and 16B in their entirety are located at a height position higher than or equal to the position of the top surface 22A of the rotating plate 22. In addition, when providing a plurality of additive supply ports, for example, it is preferable that all of the additive supply ports are arranged above the top surface of the rotating plate.

The flow rate, the pressure, or the like of the additive added from the additive supply ports 16A and 16B are not particularly limited. If the additive supply ports 16A and 16B are provided in the side plate 113, the flow rate or the like of the additive is preferably adjusted so that the additive moves in the direction toward the center of the rotating plate 22 in the mixing and stirring region 21, for example. That is, the flow rate or the like of the additive is preferably selected so that the addition of the additive to the mixing and stirring region 21 is not inhibited by being pushed by the calcined gypsum or the like flowing in the mixing and stirring region 21.

A plurality of additive supply ports 16A and 16B may be provided, and the additive supply ports 16A and 16B may be provided at the two locations illustrated in FIG. 1, for example, or may be provided at three or more locations. In addition, only one additive supply port may be provided. The additive supply pipes 17A and 17B may be connected to the additive supply ports 16A and 16B, and the additive in the additive storage tank may be supplied via the supply pipes.

The additive supplied from the additive supply ports 16A and 16B is water. If the plurality of additive supply ports is provided as described above, the additive supplied from the additive supply ports is the same for each additive supply port.

In the raw material supply process, a ratio of the additive is 0.01 parts or greater and 10 parts or less, with respect to 100 parts of the calcined gypsum

### (Mixing and Stirring Process)

In the mixing and stirring process, the disk-shaped rotating plate 22 arranged inside the housing 11 may be rotated by rotating the rotating drive shaft 13 which penetrates the top plate or the bottom plate of the housing and connects to the rotating plate 22, to thereby mix and stir the calcined gypsum and the additive.

As described above, in the pretreatment mixing and stirring device 10, the calcined gypsum and the additive supplied to the mixing and stirring region 21 may be caused to flow in the circumferential direction at the outer peripheral region due to the centrifugal force, to be mixed and stirred, by rotating the rotating plate 22 in the direction of the arrow R illustrated in FIG. 1, for example.

As described above, the rotating plate 22 may be a disk-shaped plate having a smooth outer circumference, and may have a large number of tooth profiles 31 along the outer circumference, as illustrated in FIG. 3, for example. By providing the tooth profiles 31 in this manner, the calcined gypsum and the additive can be mixed more uniformly. The preferred shape of the tooth profiles 31 is as described above, and thus, a description thereof will be omitted.

For example, a plurality of pins or the like may be arranged on the top surface 22A, perpendicularly to the top surface 22A, so as to more uniformly mix the supplied calcined gypsum or the like. When arranging the plurality of pins on the top surface 22A of the rotating plate 22, the pins may be arranged along the outer circumference of the rotating plate 22 at constant intervals, or may be arranged along the diametrical direction of the rotating plate 22. The rotary plate may be provided with the tooth profiles 31 described above, and may further have the pins arranged thereon.

The rotating speed of the rotating drive shaft 13 and the rotating plate 22 is not particularly limited, and may be set arbitrarily according to the amounts or the like of the calcined gypsum and the additive which are supplied, and the rotating speed may be 200 rpm or higher and 600 rpm or lower, for example.

As described above, the scrapers 231 through 233 having at least one bar shape may further be arranged in the mixing and stirring region 21, above the top surface of the rotating plate 22.

In this case, the first ends 231A, 232A, and 233A of the scrapers 231 through 233 may be arranged in the central region of the rotating plate, and the second ends 231B, 232B, and 233B, the opposite to the first ends 231A, 232A, and 233A, may be arranged on the outer circumference side of the rotating plate.

By arranging the scrapers 231 to 233 in this manner, it is possible to more uniformly mix the calcined gypsum and the additive. In addition, it is possible to particularly reduce the adhesion of the calcined gypsum or the like to the bottom surface 111A of the top plate 111 and the inner peripheral surface of the side plate 113, for example.

In FIG. 2 and FIG. 3, three linear scrapers 231 to 233 are illustrated, however, the scrapers are not limited to such. For example, one or two scrapers may be arranged, or four or more scrapers may be arranged. The scraper may have a shape including one or a plurality of bent portions along the longitudinal direction. If the pretreatment mixing and stirring device has a plurality of scrapers, the plurality of scrapers may have the same shape, or may include scrapers having different shapes.

The pretreatment calcined gypsum manufacturing method according to the present invention is described heretofore, separately for each of the raw material supply process, and the mixing and stirring process. However, the raw material supply process, and the mixing and stirring process may be performed continuously, or simultaneously.

The pretreatment calcined gypsum manufacturing method according to the present invention may be configured to include processes other than the raw material supply process and the mixing and stirring process described above. For example, the other processes may include a discharge process which will be described in the following.

### (Discharge Process)

In the discharge process, the gypsum mixture produced in the mixing and stirring process may be discharged from the discharge port 18.

Hence, the pretreatment calcined gypsum, which is the gypsum mixture formed in the mixing and stirring region 21 of the pretreatment mixing and stirring device 10, may be recovered. The pretreatment calcined gypsum, which is the gypsum mixture, does not become a gypsum slurry, and is the gypsum mixture in powder form, because the amount of the additive added is small even if the additive is a liquid such as water, for example.

As described above, by providing the discharge port 18, which is an opening, in the bottom plate 112 or the side plate 113, the gypsum mixture flowing in the mixing and stirring region 21 can be naturally discharged via the discharge port 18. For this reason, if the discharge port 18 is closed by a predetermined component or the like, for example, the discharge process can be performed by removing the predetermined component.

According to the pretreatment calcined gypsum manufacturing method according to the present invention described heretofore, the pretreatment of the calcined gypsum is performed using the pretreatment mixing and stirring device described above. Accordingly, compared to the conventional pretreatment which uses the bladed blender or the like to stir the calcined gypsum while kneading up the calcined gypsum in the height direction, it is possible to reduce the amount of energy consumed per unit mass of the calcined gypsum to be pretreated to one-half or less, for example.

In addition, according to the pretreatment calcined gypsum manufacturing method according to the present invention, water is used as the additive, and it is possible to greatly improve the efficiency of the heal treatment of the calcined gypsum, and greatly increase the amount of the heal treatment of the calcined gypsum. For this reason, by using the pretreatment calcined gypsum manufacturing method according to the present embodiment, a large amount of calcined gypsum can be efficiently and uniformly subjected to the heal treatment, without the conventional limitation on the amount of calcined gypsum which can be subjected to the heal treatment. Moreover, when gypsum slurry is prepared using the pretreatment calcined gypsum which is subjected to the heal treatment using the pretreatment calcined gypsum manufacturing method according to the present invention, and the gypsum product, such as the gypsum board or the like, is manufactured, it is possible to reduce the moisture required for the mixing and stirring during the preparation of the slurry. As a result, it is possible to reduce the time and energy required to dry and remove the excess moisture from the gypsum product, such as the gypsum board or the like.

### [Gypsum Slurry Manufacturing Method]

Next, a gypsum slurry manufacturing method according to the present invention will be described.

The gypsum slurry manufacturing method according to the present invention includes a gypsum slurry preparing process which prepares the gypsum slurry by kneading the pretreatment calcined gypsum, obtained by the pretreatment calcined gypsum manufacturing method described above, with water.

In the gypsum slurry preparing process, the gypsum slurry may be prepared by kneading the pretreatment calcined gypsum and water, and in some cases also various kinds of additives, using a known slurry formation mixing and stirring device.

The gypsum slurry which is obtained may be used as the raw material for various kinds of gypsum products, such as the gypsum board or the like, as required.

The gypsum slurry manufacturing method according to the present invention may further perform a milling process or the like to grind the pretreatment calcined gypsum using the entoleter mill, the tube mill, or the like, in order to adjust the grain size or the like of the pretreatment calcined gypsum, as required, after the pretreatment calcined gypsum manufacturing method described above, that is, after the mixing and stirring process.

The gypsum slurry manufacturing method according to the present invention may further include a gypsum waste reduction process which reduces the gypsum waste in the pretreatment calcined gypsum after the pretreatment calcined gypsum manufacturing method, that is, after the mixing and stirring process. The gypsum waste reduction process may reduce or remove the gypsum waste from the pretreatment calcined gypsum, using one or more kinds of devices selected from the net, the sieve, the grinding mill, the trommel, or the like, for example. Examples of the grinding mill include the entoleter mill, the tube mill, or the like, for example.

### [Building Board Manufacturing Method]

Next, a building board manufacturing method according to the present invention will be described.

The building board manufacturing method according to the present invention includes a building board manufacturing process which manufactures the building board, using the gypsum slurry obtained by the gypsum slurry manufacturing method described above.

More particularly, the building board may be manufactured using the building board manufacturing apparatus described above, for example. For this reason, a description of some parts of the building board manufacturing apparatus, already described above, will be omitted.

The building board manufacturing process may include a molding process which forms the gypsum slurry obtained by the gypsum slurry manufacturing method described above into an arbitrary shape, to form the molded body of the gypsum slurry, for example.

In addition, the building board manufacturing process may further include a rough cutting process which roughly cuts the molded body of the gypsum slurry obtained in the molding process, a drying process which dries the molded body of the gypsum slurry into the hardened gypsum body, a cutting process, a loading process, or the like, as required.

The rough cutting process cuts the molded body of the gypsum slurry formed in the molding process, and may be performed by the rotary cutter or the like according to the dryer, the heating furnace, or the like used in the drying process.

The drying process may forcibly dry the molded body of the gypsum slurry, into the hardened gypsum body, for example. The drying process may obtain the hardened gypsum body by drying the molded body of the gypsum slurry by natural drying, without forcibly drying the molded body of the gypsum body.

The cutting process cuts the molded body of the gypsum slurry or the hardened gypsum body, according to the size of the product, using the cutter or the like, for example.

The loading process stacks the manufactured hardened gypsum bodies using the lifter or the like, to be stored in the storage, or to be loaded into trucks or the like for shipment.

The kind of the building board manufactured by the building board manufacturing method according to the present invention is not particularly limited.

The building boards manufactured by the building board manufacturing method according to the present invention include one or more kinds of building boards selected from a glass mat gypsum board, a non-woven glass fiber-containing gypsum board, a gypsum board prescribed by JIS A 6901 (2014), a gypsum board which is lighter or heavier than the gypsum board prescribed by JIS A 6901 (2014), or the like, for example.

Particularly because the gypsum boards are popularly used, the building board manufactured by the building board manufacturing apparatus according to the present invention is preferably the gypsum board.

Although the embodiments of the pretreatment calcined gypsum manufacturing method, the gypsum slurry manufacturing method, and the building board manufacturing method are described heretofore, the present invention is not limited to the embodiments described above. Various modifications and variations may be made within the scope of the subject matter of the present invention recited in the claims.

This application is based upon and claims priority to Japanese Patent Application No. 2019-077352, filed on April 15, 2019.

### DESCRIPTION OF THE REFERENCE NUMERALS

10 Pretreatment mixing and stirring device
11 Housing
111 Top plate
112 Bottom plate
113 Side plate
13 Rotating drive shaft
14 Calcined gypsum supply port
16A, 16B Additive supply port
18 Discharge port
21 Mixing and stirring region
22 Rotating plate
22A Top surface
231 to 233 Scraper
231A to 233A First end
231B to 233B Second end
60 Gypsum slurry manufacturing apparatus
61 Slurry formation mixing and stirring device
62 Gypsum waste reducing section
70 Building board manufacturing apparatus

## Claims

1. A pretreatment calcined gypsum manufacturing method for manufacturing a pretreatment calcined gypsum using a pretreatment mixing and stirring device (10) comprising a cylindrical housing (11) having a top plate (111), a bottom plate (112) arranged to oppose to the top plate (111), a side plate (113) arranged between the top plate (111) and the bottom plate (112), and a mixing and stirring region (21) in an interior surrounded by the top plate (111), the bottom plate (112), and the side plate (113); a disk-shaped rotating plate (22) arranged inside the housing; a rotating drive shaft (13), penetrating the top plate (111) or the bottom plate (112) of the housing (11), and coupled to the rotating plate (22); a calcined gypsum supply port (14), arranged in the top plate (111) and configured to supply a calcined gypsum to the mixing and stirring region (21); and an additive supply port (16A, 16B), arranged in one of or both of the top plate (111) and the side plate (113), and configured to supply an additive to the mixing and stirring region (21), the pretreatment calcined gypsum manufacturing method comprising:
a raw material supply process which supplies the calcined gypsum from the calcined gypsum supply port (14), and water as the additive from the additive supply port (16A, 16B); so that a ratio of the additive is 0.01 parts or greater and 10 parts or less, with respect to 100 parts of the calcined gypsum and
a mixing and stirring process which rotates the rotating plate (22) by rotating the rotating drive shaft (13), to thereby mix and stir the calcined gypsum and the additive in the mixing and stirring region (21), thereby producing the pretreatment calcined gypsum which is a gypsum mixture in powder form.

2. The pretreatment calcined gypsum manufacturing method as claimed in claim 1, further comprising:
a discharge process which discharges the gypsum mixture produced by the mixing and stirring process via a discharge port (18) of the pretreatment mixing and stirring device (10).

3. A gypsum slurry manufacturing method comprising:
a gypsum slurry preparing process which prepares a gypsum slurry by kneading the pretreatment calcined gypsum manufactured by the pretreatment calcined gypsum manufacturing method according to claim 1 or 2, and water.

4. A building board manufacturing method comprising:
a building board manufacturing process which manufactures a building board using the gypsum slurry manufactured by the gypsum slurry manufacturing method according to claim 3.

5. The building board manufacturing method as claimed in claim 4, wherein the building board is a gypsum board.

## Patentansprüche

1. Verfahren zur Herstellung von vorbehandeltem kalziniertem Gips zur Herstellung eines vorbehandelten kalzinierten Gipses unter Verwendung einer Misch- und Rührvorrichtung (10) für die Vorbehandlung, umfassend ein zylindrisches Gehäuse (11) mit einer oberen Platte (111), einer der oberen Platte (111) gegenüberliegenden unteren Platte (112), einer zwischen der oberen Platte (111) und der unteren Platte (112) angeordneten Seitenplatte (113) und einem Misch- und Rührbereich (21) in einem von der oberen Platte (111), der unteren Platte (112) und der Seitenplatte (113) umgebenen Innenraum; eine scheibenförmige Drehplatte (22), die im Inneren des Gehäuses angeordnet ist; eine rotierende Antriebswelle (13), die die obere Platte (111) oder die untere Platte (112) des Gehäuses (11) durchdringt und mit der Drehplatte (22) verbunden ist; eine Zufuhröffnung (14) für kalzinierten Gips, die in der oberen Platte (111) angeordnet ist und dazu konfiguriert ist, dem Misch- und Rührbereich (21) kalzinierten Gips zuzuführen; und eine Additivzufuhröffnung (16A, 16B), die in der oberen Platte (111) und/oder der Seitenplatte (113) angeordnet ist und dazu konfiguriert ist, dem Misch- und Rührbereich (21) ein Additiv zuzuführen, wobei das Verfahren zur Herstellung von vorbehandeltem kalziniertem Gips umfasst:
einen Rohmaterialzufuhrprozess, bei dem der kalzinierte Gips über die Zufuhröffnung (14) für kalzinierten Gips und Wasser als das Additiv über die Additivzufuhröffnung (16A, 16B) zugeführt werden, sodass das Verhältnis des Additivs 0,01 Teile oder mehr und 10 Teile oder weniger, bezogen auf 100 Teile des kalzinierten Gipses, beträgt, und
einen Misch- und Rührprozess, bei dem die Drehplatte (22) durch Drehen der rotierenden Antriebswelle (13) gedreht wird, um den kalzinierten Gips und das Additiv in dem Misch- und Rührbereich (21) zu mischen und zu rühren, wodurch der vorbehandelte kalzinierte Gips hergestellt wird, der ein Gipsgemisch in Pulverform ist.

2. Verfahren zur Herstellung von vorbehandeltem kalziniertem Gips gemäß Anspruch 1 ferner umfassend:
einen Austragsprozess, bei dem das durch den Misch- und Rührprozess hergestellte Gipsgemisch über eine Austragsöffnung (18) aus der Misch- und Rührvorrichtung (10) für die Vorbehandlung ausgetragen wird.

3. Verfahren zur Herstellung einer Gipsaufschlämmung, umfassend:
einen Gipsaufschlämmungsvorbereitungsprozess, bei dem eine Gipsaufschlämmung durch Kneten des nach dem Verfahren zur Herstellung von vorbehandeltem kalziniertem Gips gemäß Anspruch 1 oder 2 hergestellten vorbehandelten kalzinierten Gipses und Wassers zubereitet wird.

4. Verfahren zur Herstellung von Bauplatten, umfassend:
einen Bauplattenherstellungsprozess, bei dem eine Bauplatte unter Verwendung der nach dem Verfahren zur Herstellung einer Gipsaufschlämmung gemäß Anspruch 3 hergestellten Gipsaufschlämmung herstellt wird.

5. Verfahren zur Herstellung von Bauplatten gemäß Anspruch 4, wobei die Bauplatte eine Gipsplatte ist.

## Revendications

1. Procédé de fabrication de gypse calciné de prétraitement destiné à fabriquer un gypse calciné de prétraitement en utilisant un dispositif de mélange et d'agitation de prétraitement (10) comportant un logement cylindrique (11) ayant une plaque supérieure (111), une plaque inférieure (112) agencée de manière à faire face à la plaque supérieure (111), une plaque latérale (113) agencée entre la plaque supérieure (111) et la plaque inférieure (112), et une zone de mélange et d'agitation (21) dans un intérieur entouré par la plaque supérieure (111), la plaque inférieure (112) et la plaque latérale (113) ; une plaque rotative en forme de disque (22) agencée à l'intérieur du logement ; un arbre d'entraînement en rotation (13), pénétrant dans la plaque supérieure (111) ou la plaque inférieure (112) du logement (11), et couplé à la plaque rotative (22) ; un orifice d'alimentation en gypse calciné (14), agencé dans la plaque supérieure (111) et configuré pour fournir un gypse calciné à la zone de mélange et d'agitation (21) ; et un orifice d'alimentation en additif (16A, 16B), agencé dans une plaque parmi la plaque supérieure (111) et la plaque latérale (113), ou les deux, et configuré pour fournir un additif à la zone de mélange et d'agitation (21), le procédé de fabrication de gypse calciné de prétraitement comportant :
un processus d'alimentation en matière première qui fournit le gypse calciné à partir de l'orifice d'alimentation en gypse calciné (14), et de l'eau en tant qu'additif à partir de l'orifice d'alimentation en additif (16A, 16B), de sorte qu'un rapport de l'additif est de 0,01 partie ou plus et de 10 parties ou moins, par rapport à 100 parties du gypse calciné et
un processus de mélange et d'agitation qui fait tourner la plaque rotative (22) en faisant tourner l'arbre d'entraînement en rotation (13), pour ainsi mélanger et agiter le gypse calciné et l'additif dans la zone de mélange et d'agitation (21), en produisant ainsi le gypse calciné de prétraitement qui est un mélange de gypse sous forme de poudre.

2. Procédé de fabrication de gypse calciné de prétraitement selon la revendication 1, comportant en outre :
un processus d'évacuation qui évacue le mélange de gypse produit par le processus de mélange et d'agitation via un orifice d'évacuation (18) du dispositif de mélange et d'agitation de prétraitement (10).

3. Procédé de fabrication de pâte de gypse comportant :
un processus de préparation de pâte de gypse qui prépare une pâte de gypse en malaxant le gypse calciné de prétraitement fabriqué par le procédé de fabrication de gypse calciné de prétraitement selon la revendication 1 ou 2, et de l'eau.

4. Procédé de fabrication de panneau de construction comportant :
un processus de fabrication de panneau de construction qui fabrique un panneau de construction en utilisant la pâte de gypse fabriquée par le procédé de fabrication d'une pâte de gypse selon la revendication 3.

5. Procédé de fabrication de panneau de construction selon la revendication 4, dans lequel le panneau de construction est une plaque de plâtre.
